# EUROPÄISCHE PATENTANMELDUNG

(11) **EP 2 849 254 A1**
(43) Veröffentlichungstag der Anmeldung: **18.03.2015**
(21) Anmeldenummer: 14182404.5
(22) Anmeldetag: 27.08.2014
(51) Int. Cl.: H01M 2/10, B60L 11/18, H01M 2/30, H01M 10/42, H01R 11/28, H02J 7/00, H01M 10/0525, H01M 10/06

(54) **Fahrzeugbatterie und Fahrzeugbatteriepolklemme sowie System und Verfahren für eine Fahrzeugbatterie**

(30) Priorität: 12.09.2013 DE 102013015043; 29.11.2013 DE 102013018009
(71) Anmelder: Auto-Kabel Management GmbH, 79688 Hausen i.W. (DE)
(72) Erfinder: Gronwald, Frank, 50181 Bedburg (DE); Betscher, Simon, 41515 Grevenbroich (DE); Tazarine, Ouassim, 52078 Aachen (DE)
(74) Vertreter: Cohausz & Florack

(57) **Zusammenfassung**

Fahrzeugbatterie, Fahrzeugbatteriepolklemme als auch ein System zum Betreiben eines Fahrzeugs. In der Fahrzeugbatterie ist ein Energiespeicher vorgesehen, wobei zumindest ein erstes Speichermodul 30 und ein zweites Speichermodul 32 jeweils einen Energiespeicher aufweisen. Innerhalb der Speichermodule 30, 32 sind dazu Speicherzellen 34 in Reihe geschaltet. Um zu gewährleisten, dass ein Einbruch der Batteriespannung im Startfall nicht auf ein Verbrauchernetzwerk wirkt, wird vorgeschlagen, dass die Speichermodule 30, 32 mit jeweils einem ersten Ausgang miteinander kurzgeschlossen sind und dass die Speichermodule 30, 32 an jeweils einem dem ersten Ausgang des elektrisch gegenpoligen zweiten Ausgang über ein zumindest innerhalb des Gehäuses angeordnetes Schalterelement 38 miteinander verbunden sind.

## Beschreibung

Der Gegenstand betrifft eine Fahrzeugbatterie, eine Fahrzeugbatterieklemme, ein System mit einer solchen Fahrzeugbatterie sowie ein Verfahren zum Betreiben einer solchen Fahrzeugbatterie.

Verbrennungsmotoren in Kraftfahrzeugen bieten im Stillstand kein Drehmoment. Aus diesem Grunde können solche Verbrennungsmotoren bis zum heutigen Tage nicht selbstständig durch Einspritzen von Kraftstoff gestartet werden. Dies bedingt, dass der Verbrennungsmotor bzw. die Brennkraftmaschine innerhalb des Fahrzeugs mit einem Drehmoment beaufschlagt werden muss, um zu starten. Dieses Drehmoment wird in der Regel durch einen Starter bzw. eine elektrische Maschine zur Verfügung gestellt. Eine solche elektrische Maschine ist zum Starten bzw. Anlassen des Verbrennungsmotors notwendig.

Der Starter des Verbrennungsmotors wird von der Batterie des Kraftfahrzeugs gespeist. Im Moment des Startens, d.h. beim Anlaufen des Starters, ist dessen induktive Last niederohmig und ein sehr hoher Strom fließt von der Batterie über den Starter. Die Induktivität des Starters stellt im Moment des Startens nahezu einen Kurzschluss dar. Der hierdurch bedingte hohe Stromfluss führt zu Einbrüchen der Batteriespannung an den Batteriepolen einer Fahrzeugbatterie. Bei einem typischen Startvorgang eines Fahrzeugs bricht die Batteriespannung nach einer kurzen Zeit unter einen Grenzwert ein. In der Folge kann es daher dazu kommen, dass andere Verbraucher im Bordnetz des Fahrzeugs, welche eine Mindestspannung benötigen, nicht mehr mit ausreichend elektrischer Energie versorgt werden können.

Der Spannungseinbruch tritt bei allen Fahrzeugen mit Verbrennungsmotor beim Startvorgang auf, wenn der Verbrennungsmotor mittels eines Starters gestartet wird. Fahrzeuge im Sinne des Gegenstandes können beispielsweise Automobile, Schienenfahrzeuge oder Luftfahrzeuge sein. Ferner sind auch Schiffe, Fahrzeuge im Sinne des Gegenstandes.

Um diesen Spannungseinbruch beim Startvorgang, insbesondere im Start-Stopp Betrieb, wie er heute zur Kraftstoffeinsparung üblich geworden ist, zu verhindern, existieren eine Vielzahl von Spannungsstützkonzepten, wie beispielsweise die Verwendung von Stützkondensatoren, die Verwendung von zusätzlichen Batterien als auch der Einsatz von Startstrombegrenzungssystemen.

Ein Startspannungs- bzw. Startstrombegrenzungssystem ist auch bekannt als Startspannungseinbruchsbegrenzer (SEB), Start Current Limiter (SCL), Start-Current Control (SCC), Voltage Drop Limiter (VDL) oder dergleichen. Ein solches Startstrombegrenzungssystem begrenzt den Startspannungseinbruch durch Reduzierung des Stroms, der von der Batterie zum Starter fließt. Es werden dabei weiterhin Spannungseinbrüche bis zu einer definierten Untergrenze in Kauf genommen. Außerdem wird eine Startzeitverzögerung in Kauf genommen, da der Starter im Startvorgang nicht die komplette verfügbare elektrische Energie der Batterie zur Verfügung gestellt bekommt, sondern nur eine begrenzte.

Während des Anlassvorgangs mit einer konventionellen Batterie bricht die Batteriespannung nach wenigen Millisekunden unter 8 Volt ein. Dieser anfängliche Spannungseinbruch wirkt auf alle an die Batterie angeschlossenen elektrischen Verbraucher. Der anfängliche Spannungseinbruch, der nur kurzfristig auftritt, könnte beispielsweise durch vorgeschaltete Pufferkondensatoren kompensiert werden. Bei einem herkömmlichen Anlassvorgang erholt sich die Spannung der Batterie unmittelbar nach dem Starten kurzzeitig auf über 9 Volt, um dann jedoch erneut unter 9 Volt einzubrechen. Dieser zweite Spannungseinbruch kann durch herkömmliche Pufferkondensatoren nicht aufgefangen werden, da deren Kapazität lediglich zur Kompensation des ersten Spannungseinbruchs ausreicht. Die Pufferkondensatoren sind regelmäßig nach dem ersten Spannungseinbruch entladen und der zweite Spannungseinbruch während eines Startvorgangs führt zu Problemen innerhalb des Bordnetzes. Insbesondere Motorsteuergeräte als auch Airbagsteuergeräte sowie sonstige Steuergeräte können kurzfristig ausfallen, da nicht jedes Steuergerät auf ein solch niedriges Spannungsniveau von unter 9 Volt ausgelegt ist.

Startstrombegrenzungssysteme sind in der Regel zwischen der Batterie und dem Starter angeordnet. Herkömmliche Bordnetztopologien beinhalten eine Batterie, einen Starter, einen Generator sowie zumindest ein Verbrauchernetzwerk. Je nach Konzept werden der Starter und der Generator mit jeweils einer getrennten Leitung versorgt oder mit einer kombinierten Starter-Generatorleitung.

Bei einem Startstrombegrenzungssystem herkömmlicher Art wird in der Starterleitung eine Parallelschaltung aus einem Zweig mit einem Widerstand und einem Zweig mit einem Schalternetz, beispielsweise mit Halbleiterschaltern, vorgesehen. Im Moment des Anlassens des Verbrennungsmotors insbesondere in einer ersten Startphase wird das Schalternetzwerk geöffnet und Strom fließt ausschließlich über den Widerstand. Dies führt zu einer Begrenzung des Startstroms und einer Reduzierung des Spannungseinbruchs an der Batterieklemme. Im Anschluss an die erste Startphase, beispielsweise nach 100 ms, in einer zweiten Startphase wird der parallele Zweig mit den Schaltern geschlossen. Der Gesamtwiderstand der Parallelschaltung verringert sich und es fließt ein erhöhter Strom von der Batterie zum Starter. Der Strom über den Zweig mit den Schaltern lässt sich durch eine Art Pulsbetrieb der Schalter einstellen, indem sich durch gepulstes Ein- und Ausschalten der Schalter ein über die Zeit gemittelter Widerstand dieses Zweiges einstellt.

Die Vielzahl der Funktionskomponenten innerhalb des Startstrombegrenzungssystems führen jedoch zu einer erheblichen Herausforderung hinsichtlich des zur Verfügung stehenden Bauraums. Insbesondere im Bereich der Fahrzeugbatterie ist der verfügbare Bauraum sehr begrenzt, so dass zusätzliche Funktionen stets eine konstruktive Herausforderung darstellen.

Somit lag dem Gegenstand die Aufgabe zugrunde, ein Startstrombegrenzungssystem zur Verfügung zu stellen, welches in besonders einfacher Weise in bestehende Bauräume integrierbar ist.

Diese Aufgabe wird durch eine Fahrzeugbatterie nach Anspruch 1 gelöst.

Vorzugsweise ist die gegenständliche Fahrzeugbatterie in einem Gehäuse gekapselt. Das Gehäuse ist in der Regel ein genormtes Gehäuse für Fahrzeugbatterien, insbesondere eine nach DIN 50342-2 sowie DIN 72311 genormte Fahrzeugbatterie. Die Fahrzeugbatterie besteht in der Regel aus einem Boden und vier Seitenwänden. Auf der Oberseite bzw. dem Deckel der Fahrzeugbatterie sind in den Polnischen Batteriepole angeordnet. Vorzugsweise hat das Gehäuse genormte Seitenflächen sowie eine genormete Grundfläche. Der Deckel der Batterie kann, wie nachfolgend noch aufgezeigt werden wird, gegenüber genormten Fahrzeugbatterien abweichen. In dem Gehäuse ist ein Energiespeicher angeordnet. Dieser Energiespeicher ist in der Regel aus Akkumulatoren gebildet. Der Energiespeicher kann dabei aus einzelnen Speicherzellen gebildet sein, die in Reihe zueinander geschaltet sind. Ein Minuspol der Speicherzellen ist mit dem Minuspol der Batterie verbunden. Ein Pluspol der Speicherzellen ist mit dem Pluspol der Batterie verbunden.

Gegenständlich ist der Energiespeicher aus zwei unterschiedlichen Speichermodulen gebildet. In jedem der Speichermodule sind die Speicherzellen zumindest in Reihe miteinander verschaltet. Durch eine geeignete Verschaltung der Speicherzellen in Reihe kann eine gewünschte Ausgangsspannung an den Batteriepolen der Fahrzeugbatterie eingestellt werden.

Eine besonders platzsparende und einfach handhabbare Begrenzung des Spannungseinbruchs während des Startens kann vorzugsweise dadurch gewährleistet werden, dass die Speichermodule mit jeweils einem ersten Ausgang miteinander kurzgeschlossen sind und dass die Speichermodule an jeweils einem dem ersten Ausgang elektrisch gegenpoligen zweiten Ausgang über zumindest ein innerhalb des Gehäuses angeordnetes Schalterelement miteinander elektrisch verbunden sind. Das Schalterelement verbindet zwei gleichpolige Ausgänge der beiden Speichermodule miteinander und kann durch Öffnen und Schließen die elektrische Verbindung zwischen den Speichermodulen and den jeweiligen Ausgängen herstellen oder unterbrechen. Wenn nun an ein Speichermodul der Starter angeschlossen ist und an das jeweils andere Speichermodul zumindest Teile des Rests des Bordnetzes, ist es durch Öffnen des Schalterelements möglich, den Spannungseinbruch im Startfall von diesem Teil des Bordnetzes zu trennen.

Dass bedeutet, dass das Speichermodul, welches das Bordnetz speist, im Startfall von dem Starter getrennt ist und das Verbrauchernetzwerk mit einer konstanten Spannung versorgt. Der Startvorgang kann zumindest teilweise zunächst ausschließlich mit dem anderen Speichermodul durchgeführt werden. Ein Spannungseinbruch an diesem Speichermodul führt dann nicht mehr zu einem Spannungseinbruch im anderen Teil des Versorgungsnetzes des Kraftfahrzeugs.

Gemäß einem vorteilhaften Ausführungsbeispiel ist an dem Gehäuse ein erster Batteriepol angeordnet. Dieser kann ein konventioneller Minuspol sein, der insbesondere mit dem ersten Ausgang der Speichermodule verbunden ist. Die Speichermodule können an ihrem ersten Ausgang einen Minuspol ausbilden, der dann mit dem ersten Batteriepol verbunden ist.

Um das Bordnetz mit der Batterie zu verbinden, ist es möglich, zunächst dieses auch über eine Masserückführung z.B. über ein separates Kabel oder über die Karosse mit dem ersten Batteriepol, insbesondere dem Batterieminuspol zu verbinden. Auf der anderen Seite kann zumindest ein Teil des Versorgungsnetzes des Fahrzeugs mit einem zweiten am Gehäuse angeordneten Batteriepol verbunden sein. Dieser zweite an dem Gehäuse angeordnete Batteriepol kann mit dem zweiten Ausgang des ersten Speichermoduls elektrisch verbunden, bevorzugt kurzgeschlossen sein. Insbesondere kann der zweite Ausgang des ersten Speichermoduls mit dem zweiten Batteriepol unmittelbar elektrisch verbunden sein.

In dem Fall, in dem der zweite Ausgang des ersten Speichermoduls einen Pluspol bildet, bildet der zweite Batteriepol an dem Gehäuse ein Batteriepluspol. Über die in dem ersten Speichermodul in Reihe geschalteten Speicherzellen kann eine ausreichende Versorgungsspannung für das Verbrauchsnetz zur Verfügung gestellt werden. Mittels des Schalterelementes ist eine Trennung des zweiten Batteriepols von einem dritten Batteriepol möglich.

Ein solcher dritter am Gehäuse angeordneter Batteriepol kann ebenfalls ein Batteriepluspol sein. Dieser ist vorzugsweise mit dem zweiten Ausgang des zweiten Speichermoduls elektrisch verbunden, bevorzugt kurzgeschlossen. Insbesondere ist auch der zweite Ausgang des zweiten Speichermoduls ein Pluspol, sodass auch der dritte Batteriepol einen Batteriepluspol ausbildet. Dieser ist vorzugsweise auf dem gleichen elektrischen Potential wie der zweite Ausgang des ersten Speichermoduls. Über den Schalter bzw. das Schalterelement können die beiden Batteriepluspole voneinander elektrisch getrennt oder miteinander verbunden werden.

Das Schalterelement kann aus einer Parallelschaltung von einzelnen Schaltern, die wiederum einzelne Schalter aufweisen und parallel geschaltet sein können, gebildet sein. Auch ist es möglich, dass in dem Schalterelement antiserielle Schalter, beispielsweise in Form von gegenläufig geschalteten Transistoren vorgesehen sind. Somit können die Schalterelemente unidirektional als auch bidirektional Strom schalten. Vorzugsweise können auch Dioden in dem Schalterelement vorgesehen sein, um die Stromflussrichtung beispielsweise in nur eine Richtung zu ermöglichen.

Gemäß einem Ausführungsbeispiel wird vorgeschlagen, dass das Schalterelement zumindest einen elektronischen Schalter aufweist. Ein elektronischer Schalter kann beispielsweise als Halbleiterschalter gebildet sein. Dies kann beispielsweise ein Transistorschalter, ein MOSFET-Schalter, ein IGBT-Schalter oder dergleichen sein. Auch elektrische Schalter, wie beispielsweise Schütze oder Relais können vorgesehen sein.

Der Schalter bzw. das Schaltelement könnte auch durch eine Diode ersetz werden, die in Durchlassrichtung von dem dritten Pol zu dem zweiten Pol geschaltet ist. Insbesondere kann dies erfolgen, wenn der Generator am dritten Pol angeschlossen ist

Wie zuvor angedeutet, kann das Schalterelement aus einer Mehrzahl von Schaltern gebildet sein. Daher wird auch vorgeschlagen, dass das Schalterelement aus einer Parallelschaltung von zumindest zwei getrennt schaltbaren Schaltern gebildet ist. Insbesondere ist eine hohe Stromtragfähigkeit und/oder ein geringer Übergangswiderstand des Schalterelements notwendig, um Verlustleistung zu vermeiden und dauerhaft stabil betrieben zu werden.

Im Fall des Startens einer Verbrennungsmaschine fließt in der Regel von der Batterie ein Strom von mehreren 100 Ampere zum Starter. Halbleiterschalter müssen für solch hohe Ströme ausgelegt sein und die Verlustleitung über diese Schalter sollte möglichst gering sein. Es kann günstiger sein, mehrere Halbleiter parallel zu schalten um den gewünschten Übergangswiderstand durch die Parallelschaltung der einzelnen Halbleiterschalter in Summe zur Verfügung zu stellen. Auch kann durch ein Parallelschalten von mehreren Halbleiterschaltern der Ausfall eines einzelnen Halbleiterschalters gegebenenfalls kompensiert werden. Darüber hinaus kann durch kaskadiertes Schalten von Halbleiterschaltern innerhalb eines Schalterelements der Übergangswiderstand des Schalterelements variiert werden, was insbesondere bei der Startstromeinschaltbegrenzung relevant sein kann. So können beispielsweise zu Beginn nur wenige Halbleiterschalter innerhalb eines Schalterelements geschlossen werden und nach und nach Halbleiterschalter zugeschaltet werden.

Auch ist es möglich, den Strom zwischen Batterie und Starter gepulst schaltbar zu machen. Durch ein gepulstes Schalten der Schalterelemente kann ein mittlerer Widerstandswert eingestellt werden. Hierdurch kann die Belastung des ersten Speichermoduls beim Startvorgang begrenzt werden, wenn dieses nicht unmittelbar mit dem Starter verbunden ist. Der Startstrom wird dann vorzugsweise durch das zweite Speichermodul, welches unmittelbar über die Starter-Batterie-Leitung mit dem Starter verbunden sein kann, zur Verfügung gestellt. Ein Spannungseinbruch durch den hohen Strom in der ersten Startphase kann somit auf das zweite Speichermodul begrenzt werden, da das erste Speichermodul vor einem zu hohen Strom und den damit einhergehenden Spannungseinbruch durch das Schalterelement geschützt werden kann. Das erste Speichermodul kann während der Startphase vollständig oder zeitweise von dem Starter elektrisch getrennt werden und seine Kapazität steht vollständig dem Verbrauchernetz des Fahrzeugs zur Verfügung.

Das zwischen den beiden zweiten Ausgängen der beiden Speichermodule angeordnete Schalterelement ermöglicht es, im Fall des Starts des Motors das Speichermodul, welches mit Teilen des Bordnetz verbunden ist, von dem Speichermodul elektrisch zu trennen, welches mit dem Starter verbunden ist. Durch ein gepulstes Schalten des Schalterelements ist es möglich, das erste Speichermodul bereits beim Startvorgang zumindest teilweise mit dem Starter über den dritten Batteriepol in Verbindung zu bringen. In diesem Fall fließt über das Schalterelement ein hoher Strom von dem ersten Modul zu dem Starter, sodass das Schalterelement auch für solche hohen Ströme ausgelegt sein muss. Dabei sollte die Spannung des ersten Speichermoduls nicht unter eine Schwelle von 11 V, 10V und insbesondere 9V einbrechen. Ein Verbinden (auch gepulst) des ersten Speichermoduls mit dem zweiten Speichermodul während des Starts kann dann vorteilhaft sein, wenn eine Startfähigkeit nur mit dem zweiten Speichermoduls nicht gegeben ist. Folglich würde die Spannung des ersten Speichermoduls einbrechen. Dieser Spannungseinbruch sollte durch ein geeignetes Verbinden des ersten Speichermoduls mit dem zweiten Speichermodul möglichst gering gehalten werden.

Die Speicherzellen des Speichermoduls können beispielsweise Bleiakkumulator-Zellen sein. Diese haben sich im Dauerbetrieb bewährt, sind jedoch recht schwer im Verhältnis zu ihrer Speicherkapazität. Lithium-Eisen-Phosphat-Akkumulator-Zellen als auch Lithium-Ionen-Akkumulator-Zellen eignen sich ebenso zum Speichern der elektrischen Energie und zeichnen sich durch eine sehr hohe Energiedichte aus. Bei diesen Zellen ist jedoch sicherzustellen, dass keine Überströme an den Verbindungsstellen der einzelnen Zellen auftreten, die zu Zerstörung führen könnten. Daher ist gerade bei solchen neuartigen Akkumulator-Zellen die Begrenzung des Einschaltstroms wichtig.

In jedem der beiden Speichermodule können nacheinander in Reihe geschaltete Speicherzellen angeordnet sein. Insbesondere ist die Anzahl der in Reihe geschalteten Speicherelemente bei beiden Speichermodulen gleich. Das heißt, dass beispielsweise in dem ersten Speichermodul vier Speicherelemente aus jeweils zwei parallel geschalteten Speicherzellen in Reihe geschaltet sein können und in dem zweiten Speichermodul können beispielsweise vier Speicherelemente mit jeweils fünf parallel geschalteten Speicherzellen in Reihe geschaltet sein können. Es kommt im Wesentlichen auf die gleiche Anzahl der in Reihe geschalteten Speicherzellen an, so dass die Leerlaufspannung zwischen dem ersten Ausgang und dem jeweils zweiten Ausgang des ersten Speichermoduls bzw. des zweiten Speichermoduls im Wesentlichen gleich ist, insbesondere beispielsweise 12 Volt, 14 Volt, 24 Volt, 48 Volt etc.

In den jeweiligen Speichermodulen können ganzzahlige Vielfache von drei oder vier Speicherzellen in Reihe geschaltet sein. So ist es beispielsweise möglich, dass pro Speichermodul neun Speicherzellen vorhanden sind, wobei jeweils drei parallel zueinander geschaltet sind und die jeweils drei parallel zueinander geschalteten Speicherzellen in Reihe zueinander geschaltet werden. Auch ist es möglich, dass beispielsweise 12 Speicherzellen vorgesehen sind und pro Speichermodul können jeweils drei Speicherzellen parallel geschaltet werden und vier solcher parallel geschalteter Speicherzellen können in Reihe miteinander geschaltet sein. Hierdurch lassen sich die Ausgangsspannungen auf 12 bzw. 14 Volt einstellen. Um zu verhindern, dass ein Leerlaufstrom zwischen den Speichermodulen im Stillstand fließt, ist die Anzahl der in Reihe zu schaltenden Speicherzellen pro Speichermodul vorzugsweise gleich zu wählen. Insbesondere sollten die Speichermodule eine identische Leerlaufspannung zwischen ihren beiden Ausgängen aufweisen, ansonsten fließen Leerlaufströme zwischen den Speichermodulen.

Jeweils mehr als eine Speicherzelle kann parallel zueinander geschaltet sein. Diese parallel geschalteten Speicherzellen werden dann jeweils in Reihe geschaltet, insbesondere drei oder vier nacheinander geschaltete parallel zueinander geschaltete Speicherzellen.

Das Gehäuse der Fahrzeugbatterie kann ein herkömmliches Gehäuse sein, um beispielsweise in der Batteriewanne von herkömmlichen Fahrzeugen aufgenommen werden zu können. Ein Nachrüsten ist somit besonders einfach möglich. Um die Verkabelung möglichst einfach zu gestalten, ist es beispielsweise möglich, dass der erste Batteriepol an einem Boden des Gehäuses angeordnet ist. Somit könnte die auf dem Boden der Batteriewanne angeordnete Batterie unmittelbar den ersten Batteriepol mit dem Fahrzeugblech in Kontakt bringen und hierüber eine Masserückführung realisieren. Der erste Batteriepol ist dabei vorzugsweise flächig, vorzugsweise vollflächig an einer Außenwand des Gehäuses und/oder dem Boden des Gehäuses angeordnet. Je größer die Fläche des Batteriepols ist, desto geringer der Übergangswiderstand zwischen dem Batteriepol und der Fahrzeugkarosse bzw. dem daran angeschlossenen Kabel.

Auch wird vorgeschlagen, dass der erste Batteriepol an einem Deckel oder auch am Boden des Gehäuses vorzugsweise flächig oder vollflächig angeordnet ist.

Die Batteriepole können auch in einer Polnische der Fahrzeugbatterie als vorzugsweise konische Anschlussbolzen angeordnet sein. Die Fahrzeugbatterie hat vorzugsweise zwei Polnischen, so dass zumindest zwei Anschlüsse in den Polnischen untergebracht sein können. Auch ist es möglich, dass in einer Polnische zwei Batteriepole und in einer anderen Polnische ein dritter Batteriepol angeordnet ist. Auch kann ein Kontaktelement vorgesehen sein, in das der zweite und der dritte Batteriepol gemeinsam integriert sind, wie nachfolgend noch beschrieben wird. Ein Batteriepol im Sinne des Gegenstands kann als Stecker oder Buchse ausgestaltet sein. Insbesondere ist ein Batteriepol ein elektrischer Abgriff an einer Batterie.

Eine Fahrzeugbatterie ist regelmäßig mit einer genormten Polnische versehen. Insbesondere die DIN-Normen DIN EN 50342-2 sowie DIN 72311 geben Normmaße für die Polnische sowie einen zwischen den Polnischen verlaufenden Gehäuseversatz der Batterie an. Die Polnische ist dabei der Bereich, der den Batteriepol aufweist und durch Seitenwände der Batterie einerseits und Außenkanten der Batterie andererseits begrenzt ist. Vorzugsweise weist die Polnische ein maximales Maß von 60 mm an 72,5 mm auf. Die Höhe der Polnische ist regelmäßig zwischen 30 und 40 mm, vorzugsweise unterhalb von 35 mm. Innerhalb dieses Bauraums kann der Batteriepol angebracht sein und vorzugsweise kann unter insbesondere unter Verwendung des zwischen den Polnischen verlaufenden länglichen Versatzes auch das Schalternetzwerk in der Polnische angeordnet sein. Es versteht sich, dass die räumliche Anordnung des Schalternetzwerks innerhalb der Polnische so verstanden werden kann, dass hiermit gemeint ist, dass die Baugruppe größtenteils hierin angeordnet sind. Sollte die Baugruppen teilweise außerhalb der Polnische liegen, jedoch weiterhin größtenteils innerhalb der Polnische, so ist dies von der Bedeutung des Begriffs räumlich innerhalb der Polnische umfasst.

Das Schalterelement ist vorzugsweise ein Zweipol. Dabei ist es bevorzugt, wenn ein erster Anschluss des Schalterelements mit dem zweiten Batteriepol insbesondere unmittelbar verbunden ist oder kurzgeschlossen ist. Der zweite Anschluss des Schalterelements kann auf der anderen Seite mit dem dritten Batteriepol unmittelbar verbunden sein. Auch hier ist ein Kurzschluss zwischen dem zweiten Anschluss des Schalterelements und dem dritten Batteriepol denkbar. Vorzugsweise ist das Schalterelement unmittelbar unterhalb des Deckels der Fahrzeugbatterie angeordnet. Die Anzahl der in Reihe geschalteten Speicherzellen pro Speichermodul kann identisch sein. Jedoch kann pro in Reihe geschalteter Speicherzelle auch mehr als eine Speicherzelle parallel geschaltet sein. Um den Startstrom hoch halten zu können, wird vorgeschlagen, dass das zweite Speichermodul ein ganzzahliges Vielfaches an Speicherzellen des ersten Speichermoduls aufweist, da dann die Speicherkapazität des zweiten Speichermoduls ausreichend hoch ist, um eine längere Zeit einen hohen Strom zu gewährleisten. In dem Fall wird zusätzlich gewährleistet, dass die Anzahl der in Reihe geschalteten Speicherzellen bei beiden Speichermodulen gleich ist, bei dem zweiten Speichermodul jedoch pro in Reihe geschalteter Speicherzelle mehr als eine Speicherzelle parallel geschaltet ist. Dann stellt das zweite Speichermodul eine ausreichend hohe Speicherkapazität für den Startvorgang zur Verfügung. Die Ausgangsspannungen der beiden Speichermodule bleiben jedoch gleich. Um den Startvorgang durchführen zu können, wird vorgeschlagen, dass das zweite Speichermodul eine größere, vorzugsweise ganzzahlig Vielfache Speicherkapazität des ersten Speichermoduls aufweist.

Das erste Speichermodul und mithin der zweite Batteriepol dienen zur Versorgung zumindest Teilen des Bordnetzes. Aus diesem Grunde wird vorgeschlagen, dass der zweite Batteriepol zum Anschluss an einen Teil des Bordnetzes ohne den Starter gebildet ist. Da die Speicherkapazität des ersten Speichermoduls geringer als die des zweiten Speichermoduls ist, ist es zum Starten des Starters nur bedingt geeignet. Da das erste Speichermodul jedoch beim Startvorgang durch das Schalterelement von dem zweiten Speichermodul getrennt werden kann, kann ein Einbruch der Ausgangsspannung des ersten Speichermoduls beim Startvorgang verhindert werden.

Auf der anderen Seite kann das zweite Speichermodul mit einem Starter verbunden werden. Mithin ist der dritte Batteriepol zum Anschluss an ein Teil des Bordnetzes umfassend zumindest den Starter gebildet. Über den dritten Batteriepol und den ersten Batteriepol fließt im Fall des Startens der Startstrom und die Spannung des zweiten Speichermoduls kann einbrechen. Durch das Schalterelement wird aber vermieden, dass dieser Spannungseinbruch auch auf das erste Speichermodul wirkt, so dass die Bordnetzspannung im Teil des Bordnetzes, welcher mit dem ersten Speichermodul verbunden ist, konstant bleibt.

Eine besonders kompakte Anordnung der drei Batteriepole an einer Fahrzeugbatterie, insbesondere in den zwei Polnischen einer genormten Fahrzeugbatterie ist dann möglich, wenn der zweite und der dritte Batteriepol in einem gemeinsamen Kontaktelement geführt sind. Insbesondere sind die zweiten und dritten Batteriepole in einem einzigen Kontaktelement integriert. Dieses Kontaktelement kann beispielsweise als Anschlussbolzen, wie er bei genormten Batteriepolen zum Einsatz kommt und/oder als Stecker, Buchse oder ein anderes Kontaktmittel ausgebildet sein. Zwischen den beiden Batteriepolen innerhalb des Kontaktelements kann ein Isolator vorgesehen sein.

Um zu verhindern, dass die beiden Batteriepole und somit die zweiten Ausgänge des ersten Moduls bzw. des zweiten Moduls elektrisch in Kontakt miteinander geraten, wird vorgeschlagen, dass das Kontaktelement zumindest zwei galvanisch voneinander getrennte Kontaktbereiche aufweist. Zwischen den Kontaktbereichen kann ein Isolationselement angeordnet sein. Jeder der Kontaktbereiche ist derart an dem Kontaktelement des integrierten Batteriepols angeordnet, dass er mit einem entsprechenden Kontaktstück einer integrierten Fahrzeugbatteriepolklemme, wie sie nachfolgend beschrieben wird, in Kontakt kommen kann. Somit ist über die Batteriepolklemme der elektrische Abgriff zweier voneinander getrennter Kontaktbereiche an einem Kontaktelement möglich. Über nur eine Batterieklemme ist dann der Zugriff auf zwei voneinander über ein Schalterelement getrennte Speichermodule möglich.

Gemäß einem Ausführungsbeispiel wird vorgeschlagen, dass ein erster der Kontaktbereiche mit dem zweiten Ausgang des ersten Speichermoduls verbunden ist und das ein zweiter der Kontaktbereiche mit dem zweiten Ausgang des zweiten Speichermoduls verbunden ist. Insbesondere sind die Kontaktbereiche mit den Ausgängen der Speichermodule kurzgeschlossen bzw. unmittelbar verbunden, ohne dass ein passives und/oder aktives Bauelement zwischengeschaltet ist. Parallel zu den beiden Kontaktbereichen ist vorzugsweise das Schalterelement oder eine Diode angeordnet, so dass das Schalterelement die beiden Kontaktbereiche miteinander verbinden kann. In diesem Fall sind die Kontaktbereiche gemeinsam mit beiden Speichermodulen verbunden. Anderenfalls, bei geöffnetem Schalterelement, sind die Kontaktbereiche jeweils nur mit einem ihnen zugeordneten Speichermodul verbunden.

Das Kontaktelement, an dem die Kontaktbereiche angeordnet sind, ist vorzugsweise zylindrisch oder kegelstumpfförmig. Insbesondere ist es konisch und weist die Form einer herkömmlichen Batteriepolklemme auf. Der Unterschied zu einer herkömmlichen Batteriepolklemme ist, dass an dem Kontaktelement zwei voneinander getrennte Kontaktbereiche vorgesehen sind, die galvanisch voneinander getrennt sind.

Gemäß einem Ausführungsbeispiel wird vorgeschlagen, dass ein erster Kontaktbereich in einem ersten Winkelabschnitt entlang des Umfangs des Kontaktelements angeordnet ist. In einer Draufsicht auf das Kontaktelement ist der erste Kontaktbereich vorzugsweise in einem ersten Halbkreis um das Kontaktelement herum angeordnet. Auch ein anderer Winkelabschnitt als ein halbkreisförmiger ist möglich. Der zweite Kontaktbereich ist in einem zweiten von dem ersten Winkelabschnitt verschiedenen Winkelabschnitt entlang des Umfangs des Kontaktelements angeordnet. Das heißt, dass in einer Draufsicht auf das Kontaktelement entlang des Umfangs die beiden Kontaktelemente auf verschiedenen Winkelabschnitten angeordnet sind. Insbesondere überlappen sich die Winkelabschnitte nicht und die Kontakte bleiben somit elektrisch voneinander getrennt. Vorzugsweise sind die Kontaktbereiche auf der Umfangsfläche des Kontaktelements angeordnet.

Auch ist es möglich, dass ein erster Kontaktbereich mit einem ersten Axialabschnitt entlang der Längsachse am Umfang des Kontaktelements angeordnet ist und das ein zweiter Kontaktbereich in einem zweiten von dem ersten Axialabschnitt verschiedenen Axialabschnitt entlang der Längsachse am Umfang des Kontaktelements angeordnet ist. Hierbei ist in einer Längsrichtung des Kontaktbereichs dieses vorzugsweise in zwei Abschnitte unterteilt und einem ersten Abschnitt ist der erste Kontaktbereich angeordnet und in einem zweiten Abschnitt der zweite Kontaktbereich.

Wie bereits angedeutet, kann zumindest einer der Kontaktbereiche an einer äußeren Umfangsfläche des Kontaktelements angeordnet sein. Dies ermöglicht es in besonders einfacher Weise, die Kontaktbereiche mittels einer Batteriepolklemme zu kontaktieren. Die Batteriepolklemme muss dann lediglich um das Kontaktelement herum angelegt und mit dieser kraftschlüssig verbunden werden. Ein elektrischer Kontakt stellt sich dann zwischen der Batteriepolklemme und den an der Umfangsfläche angeordneten Kontaktbereichen ein.

Um die galvanische Trennung der Kontaktbereiche zueinander zu gewährleisten, ist ein Isolationselement zwischen den Kontaktbereichen vorgesehen. Insbesondere ist es möglich, dass ein Luftspalt zwischen den Kontaktbereichen vorgesehen ist. Auch kann zwischen den Kontaktbereichen ein isolierendes Material, wie beispielsweise Kunststoff, angeordnet sein. In der Regel sind die beiden Kontaktbereiche im Wesentlichen auf dem gleichen elektrischen Potential, da diese mit den beiden Speichermodulen verbunden sind, die in der Regel auch ein gleiches Potential an ihren Ausgängen zur Verfügung stellen. Insofern ist die Durchschlagsfestigkeit des Isolationselements von geringerer Bedeutung. Nur beim Start bricht die Spannung des zweiten Speichermoduls gegebenenfalls ein, so sehr, dass sich dann eine Potentialdifferenz zwischen den beiden Kontaktbereichen einstellt. Insbesondere dieser Potentialunterschied muss durch das Isolationselement isoliert werden.

Um sicherzustellen, dass die Batteriepolklemme richtig auf das Kontaktelement aufgesteckt wird, das heißt, dass der erste Kontaktbereich, der mit dem ersten Speichermodul verbunden ist, mit dem Teil des Bordnetzes, das getrennt von dem Starter ist, verbunden wird und der zweite Kontaktbereich, der mit dem zweiten Speichermodul verbunden ist, mit dem Teil des Bordnetzes, das mit dem Starter verbunden ist, sollten Kontaktelement und Batteriepolklemme Poka Yoke zueinander gestaltet sein. Diese Gestaltung wird vorzugsweise mittels eines Verdrehschutzes gewährleistet. Der Verdrehschutz kann an dem Kontaktelement radial verlaufend sein. Insbesondere kann dies ein Vor- oder Rücksprung sein, der radial zur Längsachse des Kontaktelements an dem Kontaktelement angeordnet ist. Hierbei kann der Verdrehschutz eine axiale Erstreckung entlang des Kontaktelements aufweisen.

Ein weiterer Aspekt ist eine Fahrzeugbatteriepolklemme für eine zuvor beschriebene Fahrzeugbatterie. Die Fahrzeugbatteriepolklemme ist in ihrem Formfaktor vorzugsweise identisch zu einer herkömmlichen Fahrzeugbatteriepolklemme. Insbesondere weist die Fahrzeugbatteriepolklemme zwei einen Batteriepol umgreifende Klemmbacken auf. Zwischen den Klemmbacken ist ein Klemmstück angeordnet. Das Klemmstück kann dazu verwendet werden, die Klemmbacken radial aufeinander zu zu bewegen, um die Batteriepolklemme an dem Kontaktelement bzw. einem Batteriepol fest zu klemmen.

Im Unterschied zu herkömmlichen Batteriepolklemmen sind die Klemmbacken jedoch aus einem Isolator gebildet. Für eine elektrische Kontaktierung der Fahrzeugbatteriepolklemme mit den Kontaktbereichen des Kontaktelementes sind auf der nach innen weisenden Oberfläche der Klemmbacken zumindest in Abschnitten zwei voneinander galvanisch getrennte Kontaktstücke angeordnet. Die Kontaktstücke sind vorzugsweise korrespondierend zu den Kontaktbereichen an dem Kontaktelement. Insbesondere ist die Fläche der Kontaktstücke im Wesentlichen kongruent zu der Fläche der Kontaktbereiche. Jedes der Kontaktstücke lässt sich somit mit einem der Kontaktbereiche elektrisch kontaktieren, indem die Klemmbacken auf das Kontaktelement aufgeschoben werden und mittels des Klemmstücks an dem Kontaktelement verklemmt werden. Dann treten die Kontaktstücke mit den Kontaktbereichen in Kontakt und es wird ein elektrischer Kontakt hergestellt. Vorzugsweise sind die Kontaktstücke als auch die Kontaktbereiche aus Kupfer oder Messing oder Aluminium gebildet.

Um eine Kontaktierung der zwei Speichermodule der Fahrzeugbatterie nach außen hin zu ermöglichen, weist die Fahrzeugbatteriepolklemme zwei voneinander getrennte Anschlusslaschen auf. Eine erste Anschlusslasche ist mit einem ersten Kontaktstück elektrisch verbunden und eine zweite Anschlusslasche ist mit einem zweiten Kontaktstück elektrisch verbunden. Die Anschlusslaschen weisen von den Klemmbacken nach außen und haben vorzugsweise Anschlussfahnen zum Anschluss von Batteriekabeln.

Gemäß einem Ausführungsbeispiel wird vorgeschlagen, dass die Klemmbacken einstückig aus dem Isolator gebildet sind. Hierbei ist der Isolator vorzugsweise ein formstabiles Material, welches elastisch verformbar ist. Mittels des Klemmstücks kann der Isolator bzw. können die Klemmbacken elastisch verformt werden, derart, dass sie radial aufeinander zu bewegt werden, um die Klemmbacken an dem Batteriepol kraftschlüssig zu fixieren.

Zwischen den Klemmbacken ist vorzugsweise eine zylindrisch oder kegelstumpfförmig verlaufende Öffnung gebildet. Insbesondere ist die zwischen den Klemmbacken verlaufende Öffnung kongruent zu der Umfangsform des Kontaktelementes, so dass die Klemmbacken formschlüssig mit dem Kontaktelement verbunden werden können.

Gemäß einem Ausführungsbeispiel ist ein erstes Kontaktstück in einem ersten Winkelabschnitt entlang der Öffnung zwischen den Klemmbacken angeordnet und ein zweites Kontaktstück in einem zweiten von dem ersten Winkelabschnitt verschiedenen Winkelabschnitt entlang der Öffnungen zwischen den Klemmbacken angeordnet. Insbesondere entsprechen die Winkelabschnitte jeweils den Winkelabschnitten der Kontaktbereiche des Kontaktelements. Es wird vorgeschlagen, dass ein erstes der Kontaktstücke in einem ersten Axialabschnitt entlang der Längsachse der Klemmbacken angeordnet ist und das ein zweites der Kontaktstücke in einem zweiten von dem ersten Axialabschnitt verschiedenen Axialabschnitt entlang der Längsachse der Klemmbacken angeordnet ist. Auch hier sind die Axialabschnitte vorzugsweise kongruent zu den Axialabschnitten der Kontaktbereiche des Kontaktelements. Somit wird eine möglichst große Kontaktfläche zwischen den Kontaktstücken und den Kontaktbereichen ermöglicht.

Gemäß einem Ausführungsbeispiel wird vorgeschlagen, dass die Klemmbacken einen radial verlaufenden Verdrehschutz für einen Batteriepol aufweisen. Insbesondere ist der Verdrehschutz ein radial verlaufender Vorsprung oder Rücksprung. Der Verdrehschutz kann eine axiale Erstreckung entlang der Klemmbacken aufweisen. Vorzugsweise ist der Verdrehschutz komplementär zu dem Verdrehschutz des Klemmelementes, sodass beim Aufstecken der Fahrzeugbatteriepolklemme auf das Klemmelement die Verdrehschutze ineinander greifen und ein Verdrehen der Fahrzeugbatteriepolklemme an dem Klemmelement verhindert. Der Verdrehschutz der Fahrzeugbatteriepolklemme ist vorzugsweise Poka Yoke mit dem Verdrehschutz des Kontaktelements.

Die Anschlusslaschen können entweder durch den Isolator hindurch mit jeweils einem der Kontaktstücke elektrisch verbunden sein. In diesem Fall weist der Isolator eine elektrische Durchführung auf. Auch ist es möglich, dass an einem axialen Ende der Klemmbacken eine elektrische Verbindung zwischen den Anschlusslaschen und den Kontaktstücken hergestellt ist. Die Anschlusslaschen und Kontaktstücke können dabei jeweils einstückig geformt sein. Auch ist es möglich, dass die Anschlusslaschen und Kontaktstücke stoffschlüssig miteinander verbunden sind.

Ein weiterer Aspekt ist ein System mit einer zuvor beschriebenen Fahrzeugbatterie sowie einer zuvor beschriebenen Fahrzeugbatteriepolklemme.

Gemäß einem weiteren Aspekt wird ein Verfahren zum Betreiben einer zuvor beschriebenen Fahrzeugbatteriepolklemme vorgeschlagen. Bei diesem Verfahren wird ein Anlasser bzw. Startersignal empfangen. Während einer ersten Startphase wird in Ansprechen auf das Anlassersignal das Schalterelement zumindest teilweise geöffnet. Vorzugsweise ist das Schalterelement während der ersten Startphase durchgehend geöffnet. Auch ist es möglich, dass das Schalterelement während der ersten Phase gepulst geöffnet wird, insbesondere pulsweitenmodelliert geöffnet wird. Hierdurch lässt sich ein gemittelter Widerstand durch das Schalterelement zwischen dem ersten und dem zweiten Speichermodul herstellen.

Während einer zweiten Startphase, die vorzugsweise zwischen 50 und 500 Millisekunden nach der ersten Startphase beginnt, kann das Schalterelement geschlossen werden.

Mit Hilfe des beschriebenen Verfahrens ist es möglich, dass erste Speichermodul in der ersten Startphase vollständig oder teilweise von dem Starter zu trennen. Ein Spannungseinbruch, der durch den Starter bewirkt wird, wirkt sich nur auf das zweite Speichermodul aus. Das erste Speichermodul kann während der gesamten Startphase ausreichend Spannung dem Bordnetz zur Verfügung stellen. Nach der ersten Startphase, insbesondere bereits während der zweiten Startphase aber auch erst danach, wenn ein weiterer Spannungseinbruch nicht mehr zu befürchten ist, kann dann das erste Speichermodul zum Starten des Starters beitragen. Hierzu wird das Schalterelement geschlossen.

Gemäß einem Ausführungsbeispiel wird vorgeschlagen, dass während eines Fahrzeugstillstands das Schalterelement geöffnet werden kann. Hierdurch kann beispielsweise bei defekten Komfortverbrauchern, die beispielsweise einen Kurzschluss verursachen, wie beispielsweise eine eingeschaltete Kofferraumlampe, die Startfähigkeit erhalten bleiben. Die Komfortverbraucher sind nämlich mit dem ersten Speichermodul verbunden und der Starter mit dem zweiten Speichermodul. Während des Startens reicht die Kapazität des zweiten Speichermoduls aus, den Starter zu starten. Selbst bei einem Entladen des ersten Speichermoduls bleibt die Startfähigkeit des Fahrzeugs erhalten.

Auch wird vorgeschlagen, dass während des Betriebs insbesondere nach der zweiten Startphase das Schalterelement geschlossen wird, um ein Laden des ersten Speichermoduls über den Generator, der beispielsweise auch an der Starter-Batterie-Leitung angeschlossen sein kann, zu ermöglichen.

Nachfolgend wird der Gegenstand anhand einer Ausführungsbeispiele zeigenden Zeichnung näher erläutert. In der Zeichnung zeigen:
- Fig. 1: Spannungsverläufe an einer Fahrzeugbatterie in einer Startphase;
- Fig. 2: ein Ersatzschaltbild einer Startstromeinschaltbegrenzung;
- Fig. 3: ein Ersatzschaltbild einer weiteren Startstromeinschaltbegrenzung;
- Fig. 4: ein Ersatzschaltbild einer Fahrzeugbatterie mit zwei Speichermodulen;
- Fig. 5: ein Ersatzschaltbild einer weiteren Fahrzeugbatterie mit zwei Speichermodulen;
- Fig. 6: ein Ersatzschaltbild einer weiteren Fahrzeugbatterie mit zwei Speichermodulen;
- Fig. 7a: eine Draufsicht auf einen Batteriepol;
- Fig. 7b: eine Seitenansicht auf einen Batteriepol;
- Fig. 8a: eine Draufsicht auf einen Batteriepol mit Batteriepolklemme;
- Fig. 8b: eine Seitenansicht auf einen Batteriepol mit Batteriepolklemme.

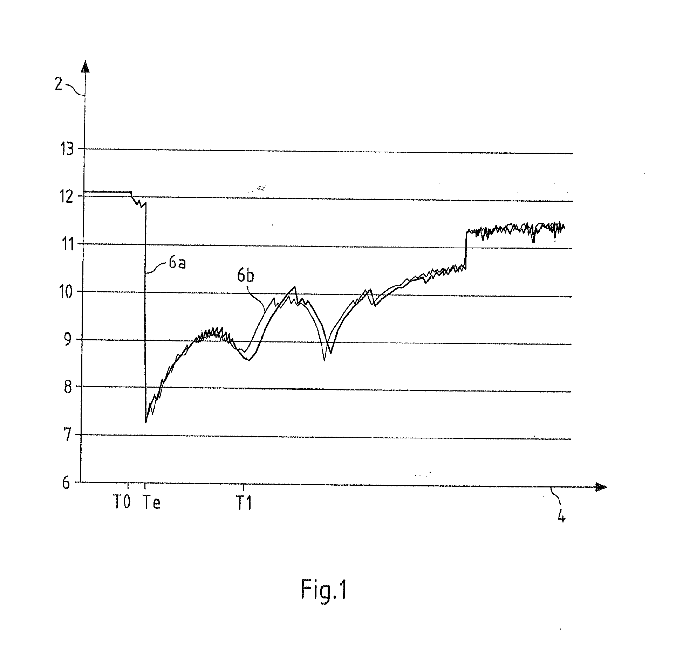

Fig. 1 zeigt den Verlauf der Spannung 2 über eine Zeit 4 von ca. einer Sekunde während eines Anlassvorgangs. Gezeigt sind zwei Spannungsverläufe 6a und 6b, die typisch für einen Anlassvorgang sind. Die Spannungsverläufe 6a und 6b sind vorzugsweise zwischen einem Batteriepluspol und einem Batterieminuspol abgegriffen. Zu erkennen ist, dass die Spannungsverläufe 6a, 6b ähnlich zueinander sind. Die Spannungsverläufe 6a, 6b zeigen das herkömmliche Verhalten einer Spannung an Batteriepolen während des Anlassvorgangs.

Zu erkennen ist, dass im Moment des Anlassens zum Zeitpunkt Tₑ die Spannungen einbrechen und die Spannung unterhalb einen Spannungswert von 8 Volt einbricht. Anschließend erholt sich die Spannung, um zu einem Zeitpunkt T1 erneut unterhalb eines Spannungswerts von 9 Volt einzubrechen. Im Anschluss daran erholt sich die Spannung weiter und erreicht nach ca. 1 Sekunde den Ausgangswert von ca. 12 Volt.

Der erste Spannungseinbruch zum Zeitpunkt Tₑ kann durch Pufferkondensatoren in den Steuergeräten abgefangen werden, so dass dieser nicht unterhalb von 9 Volt liegt. Danach sind jedoch die Pufferkondensatoren entladen und spätestens zum Zeitpunkt T₁, bei dem erneuten Spannungseinbruch unter 9 Volt wären Verbraucher im Verbrauchernetzwerk des Fahrzeugs betroffen. Es kann zu Fehlfunktionen und Ausfällen von Verbrauchern kommen. Neben Aussetzern von Navigationssystemen und Entertainmentsystemen innerhalb des Fahrzeugs, welche weniger sicherheitskritisch sind, kann es auch zu Ausfällen von sicherheitsrelevanten Komponenten kommen, was zwingend vermieden werden muss. D.h., dass neben einem Komfortgewinn auch Sicherheitsaspekte für die Begrenzung des Spannungseinbruchs im Bordnetz relevant sind.

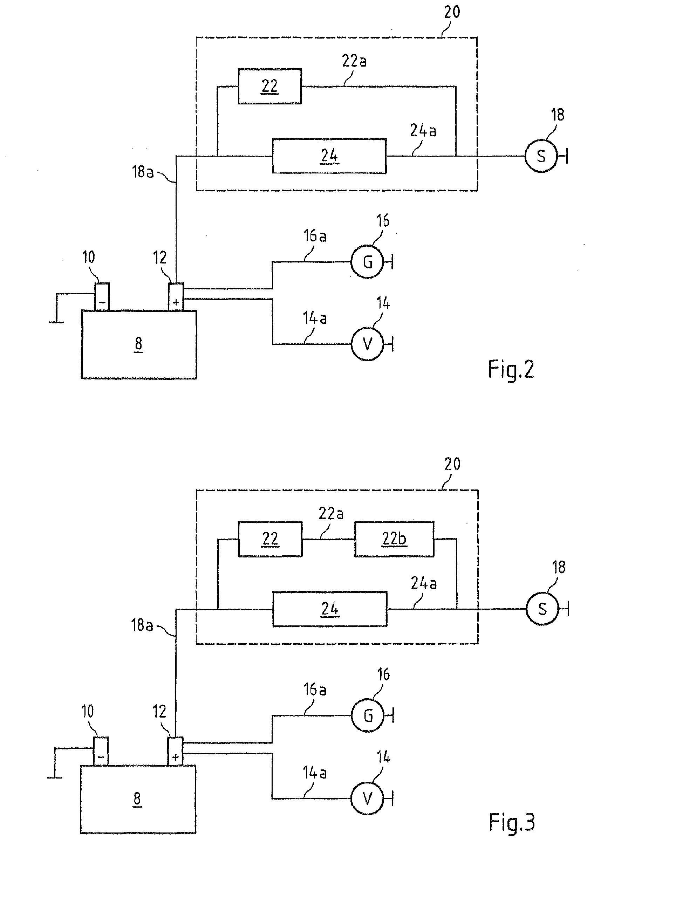

Die elektrische Topologie eines Startstrombegrenzungssystems ist beispielhaft in den Figuren 2 und 3 illustriert.

Fig. 2 zeigt eine Batterie 8 mit einem ersten Batteriepol 10 und einem zweiten Batteriepol 12, wobei der Pol 12 vorzugsweise der Pluspol ist und der Pol 10 der Minuspol, der z.B. mit einer Masserückführung in Form eines Kabels oder der Karosse verbunden ist. Vom Batteriepol 12 zweigt eine erste Leitung 14a zu einem ersten Verbrauchernetz 14 ab. Das Verbrauchernetz 14 kann aus Komfortverbrauchern, wie beispielsweise Klimaanlage, Navigationssystem, Entertainmentsystem und dergleichen sowie aus sicherheitsrelevanten Systemen, wie beispielsweise Airbagsteuergeräte, Fahrerassistenzsysteme, Servolenkung und dergleichen gebildet sein. Das Verbrauchernetzwerk 14 benötigt von der Batterie 8 eine konstante Spannung, die regelmäßig oberhalb von 9 Volt liegt. Bricht die Batteriespannung unterhalb einer solchen Grenze ein, kann es zu Fehlfunktionen innerhalb des Verbrauchernetzwerks 14 kommen.

Eine weitere Leitung 16a zweigt zu einem Generator 16 ab. Der Generator 16, auch als Lichtmaschine bekannt, stellt im Betrieb eine elektrische Energiequelle dar, um die Batterie 8 aufzuladen.

Ferner ist an dem Pol 12 eine Leitung 18a, die auch eine Polklemme aufweisen kann, angeschlossen, die zu einem Starter 18 führt. Der Starter 18 ist eine elektrische Maschine, die dazu benutzt wird, den Verbrennungsmotor anzulassen. Im Moment des Anlassens verfügt der Verbrennungsmotor über kein Drehmoment und kann nur durch ein externes Drehmoment angelassen werden, welches von dem Starter 18 zur Verfügung gestellt wird.

Der Starter 18 ist eine elektrische Maschine mit einem hohen Drehmoment, welche im Stillstand als induktive Last nur einen sehr geringen Widerstand hat. Das bedeutet, dass über den Starter 18 im Moment des Anlassens ein erheblicher Strom von der Batterie 8 fließt, der zu den in Fig. 1 gezeigten Spannungseinbrüchen führen kann. Zur Vermeidung solcher Spannungseinbrüche ist derzeit ein Startstrombegrenzungssystem 20 vorgesehen, welches aus einem Zweig 22a mit einem Widerstand 22 und einem Zweig 24a mit einer Stromstärkesteuerungseinrichtung 24 gebildet ist.

Der Betrieb eines solchen Startstrombegrenzungssystems 20 ist hinlänglich bekannt. Im Moment des Anlassens fließt Strom ausschließlich über den Zweig 22a. Nach kurzer Zeit, beispielsweise 100 ms wird der Zweig 24a hinzugeschaltet und es wird eine Parallelschaltung aus Widerstand 22 und Stromstärke-Steuerungseinrichtung 24 gebildet, über die der Strom fließt. Die Stromstärke-Steuerungseinrichtung 24 kann gepulst betrieben werden, so dass sich ein gemittelter Widerstand über den Zweig 24a einstellt. Hierdurch lässt sich die Stromstärke über das Startstrombegrenzungssystem 20 einstellen, derart, dass die Spannung an der Batterie 8 über die Pole 10 und 12 nicht unter 9 Volt abfällt. Eine entsprechende Steuerelektronik ist vorgesehen.

Fig. 3 zeigt eine zu der in Fig. 2 vorgestellte ähnliche Topologie. In Ergänzung zu den in Fig. 2 verwendeten Baugruppen, ist in dem Zweig 22a mit Widerstand 22 ein weiteres Schalternetz 22b vorgesehen. Die Stromstärke-Steuerungseinrichtung 24 als auch das Schalternetz 22b kann durch Halbleiterschalter, insbesondere parallel geschaltete Halbleiterschalter gebildet sein. Die in dem Schalternetz 22b vorhandenen Schalter sind während des Anlassens geschlossen. Nach Abschluss des Anlassvorgangs können die Schalter des Schalternetzes 22b als auch die Schalter der Stromstärke-Steuerungseinrichtung 24 vollständig geöffnet werden, so dass die Leitung 18a zwischen Startstrombegrenzungssystem 20 und Starter 18 potentialfrei ist. Dies verhindert Korrosion an der Leitung 18a und erhöht die Sicherheit im Crashfall.

Bei beiden Startstrombegrenzungssystemen ist jedoch ein zusätzlicher Aufwand im Bordnetz notwendig. Es ist darüber hinaus auch ein zusätzlicher Bauraum notwendig, um die erforderlichen Komponenten einbauen zu können.

Um die Verbraucher im Verbrauchernetzwerk 14 vor einem Einbruch der Batteriespannung der Fahrzeugbatterie 8 zu schützen, wird gegenständlich eine veränderte Topologie der Fahrzeugbatterie 8 vorgeschlagen. Hierbei ist es möglich, dass die Generatorleitung 16a samt Generator 16 an die Starterleitung 18a angeschlossen ist oder über eine getrennte Leitung mit dem Batteriepol 12 verbunden ist. Auch ist es möglich, dass die Generatorleitung 16a mit der Leitung 14a verbunden ist.

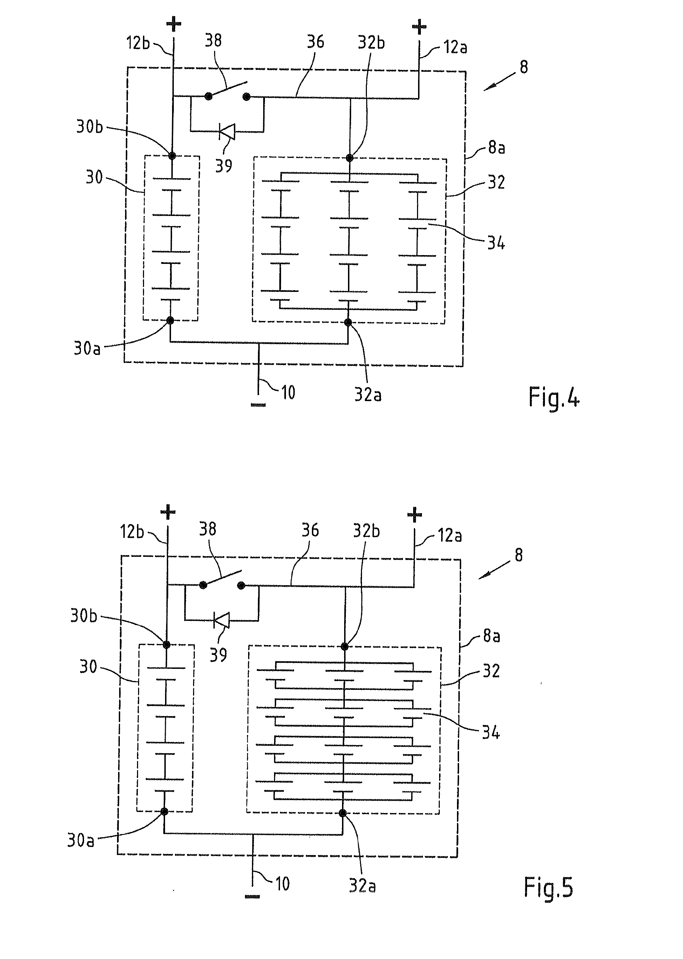

Die gegenständliche Fahrzeugbatterie 8 stellt zwei Batteriepluspole 12a, 12b zur Verfügung, die jeweils mit einem diesem Pol zugeordneten Speichermodul 30, 32 verbunden sind. Innerhalb der Fahrzeugbatterie 8 sind die Speichermodule 30, 32 über ein Schalterelement 38 miteinander verbunden. Die Topologie einer Fahrzeugbatterie 8 gemäß einem Ausführungsbeispiel ist in der Figur 4 dargestellt. Zu erkennen ist, dass der Batteriepluspol 12 zweigeteilt ist, sodass ein erster Batteriepluspol 12a und ein zweiter Batteriepluspol 12b vorgesehen sind. Innerhalb des Gehäuses 8a der Fahrzeugbatterie 8 sind zwei Speichermodule 30, 32 vorgesehen. Das erste Speichermodul 30 hat einen ersten Ausgang 30a und einen zweiten Ausgang 30b. Das zweite Speichermodul 32 hat einen ersten Ausgang 32a und einen zweiten Ausgang 32b. Zu erkennen ist, dass die jeweils ersten Ausgänge 30a, 32a unmittelbar mit dem Batteriepol 10 kurzgeschlossen sind.

Der zweite Ausgang 30b des ersten Speichermoduls 30 ist mit dem Batteriepol 12b kurzgeschlossen. Der zweite Ausgang 32b des zweiten Speichermoduls 32 ist mit dem Batteriepluspol 12a verbunden.

Zu erkennen ist, dass zwischen den zweiten Ausgängen 30b, 32b eine Verbindungsleitung oder auch Zellverbinder 36 vorgesehen ist. In der Verbindungsleitung 36 ist ein Schalter 38 vorgesehen. Der Schalter 38 wird über ein Steuersignal (nicht dargestellt) und eine Steuerschaltung (nicht dargestellt) im Fall des Anlassens des Fahrzeugs geschaltet. Der Betrieb des Schalters 38 wird nachfolgend noch beschrieben werden.

Parallel zu dem Schalter 38 kann eine Diode 39 angeordnet sein. Die Diode 39 wird derart betrieben, dass sie vom Speichermodul 30 in Richtung Speichermodul 32 sperrt. Das heiß, liegt das Potential vom Speichermodul 30 über dem des Speichermoduls 32, sperrt die Diode 39. Bei einem Spannungseinbruch am Speichermodul 32 im Startfall sperrt die Diode 39 und bei geöffnetem Schalter 38 wird das Speichermodul 30 vor diesem Spannungseinbruch geschützt. Andererseits kann das Speichermodul 32, wenn kein Spannungseinbruch vorliegt, die Spannung des Speichermoduls 30 stützen und somit die Komfortverbraucher auch bei geöffnetem Schalter 38 mit speisen.

In der Figur 4 ist ferner zu erkennen, dass in den beiden Speichermodulen 30, 32 in Reihe zueinander geschaltete Speicherzellen 34 vorgesehen sind. Auch ist zu erkennen, dass die Anzahl der in Reihe geschalteten Speichermodulen 34 sowohl im Speichermodul 30 sowie als auch im Speichermodul 32 jeweils vier beträgt. Anders als im Speichermodul 30 sind im zweiten Speichermodul 32 jedoch nicht nur insgesamt 4 Speicherzellen 34 vorgesehen, sondern eine Parallelschaltung aus drei Strängen mit jeweils vier Speicherzellen 34 ist vorgesehen. Dadurch, dass ein ganzzahliges Vielfaches an Speicherzellen 34 in dem zweiten Speichermodul 32 der Anzahl der Speicherzellen 34 in dem ersten Speichermodul 30 vorgesehen sind, ist die Kapazität des zweiten Speichermoduls 32 ein ganzzahliges Vielfaches höher als die Kapazität des Speichermoduls 30. Die Potentiale zwischen den ersten Ausgängen 30a, 32a und den jeweils zweiten Ausgängen 30b, 32b ist dabei aber vorzugsweise identisch, da die Anzahl der in Reihe geschalteter Speicherzellen 34 gleich ist.

Durch die höhere Speicherkapazität des zweiten Speichermoduls 32 kann dieses zum Starten des Starters 18 verwendet werden. Hierzu ist der Batteriepol 12a über die Starterleitung 18a mit dem Starter 18 verbunden. Galvanisch davon getrennt ist der Batteriepol 12b mit dem Verbrauchernetzwerk 14 über die Leitung 14a verbunden. Im Stillstand ist das Schalterelement 38 geöffnet.

Erfolgt nun ein Starten des Starters 18, wird ein Anlassersignal empfangen und eine Steuerschaltung übernimmt die Steuerung des Steuerelements 38. Während der ersten Startphase, insbesondere zwischen der Zeit To und T₁, beispielsweise zwischen 50 Millisekunden und 500 Millisekunden, wird der Schalter 38 geöffnet. Der Starterstrom für den Starter 18 fließt ausschließlich von dem zweiten Speichermodul 32 über den Batteriepol 12a zu dem Starter 18. Ein Spannungseinbruch wie in Fig. 1 gezeigt kann dabei am ersten Speichermodul 32 auftreten. Dieser Spannungseinbruch führt jedoch nicht zu einem Spannungseinbruch zwischen den Batteriepolen 10 und 12b, da das erste Speichermodul 30 elektrisch über den Schalter 38 von dem zweiten Speichermodul 32 getrennt ist. Das führt dazu, dass selbst bei einem Spannungseinbruch in dem zweiten Speichermodul 32 bei einem Start die Verbraucher des Verbrauchernetzwerks 14 mit der konstanten Batteriespannung des ersten Speichermoduls 30, vorzugsweise 12 Volt, gespeist werden.

Ab dem ZeitpunktT₁ ist es beispielsweise möglich, dass der Schalter 38 geschlossen bzw. gepulst geschlossen wird. Startstrom fließt nun nicht nur ausschließlich von dem zweiten Speichermodul 32 über den Batteriepol 12a zu dem Starter 18, sondern auch von dem ersten Speichermodul 30 über den Batteriepol 12a zu dem Starter 18. Dies führt zu einer Entlastung des zweiten Speichermoduls 32 und der Startvorgang kann abgeschlossen werden. Da aber in der zweiten Startphase der Spannungseinbruch nur noch geringer ist, kann durch ein gepulstes Schalten des Schalters 38 bzw. auch ggf. durch ein Schließen des Schalters 38 davon ausgegangen werden, dass die Spannung des ersten Speichermoduls 30 nicht derart einbricht, dass die Verbraucher des Verbrauchnetzwerks 14 mit einer Spannung von unter 9 Volt gespeist werden.

Figur 5 zeigt eine der Figur 4 ähnliche Topologie, wobei jedoch hier das zweite Speichermodul 32 aus einer Reihenschaltung von jeweils drei parallel zueinander geschalteten Speicherzellen 34 gebildet ist. Auch hier stellt das zweite Speichermodul 32 das vierfache der Ausgangsspannung jeder einzelnen Speicherzelle 34 zur Verfügung, da vier Speicherzellen 34 jeweils in Reihe miteinander geschaltet sind. Die Ausgangsspannung an den Ausgängen 32a und 32b entspricht der Ausgangsspannung an den Ausgängen 30a und 30b des ersten Speichermoduls 30.

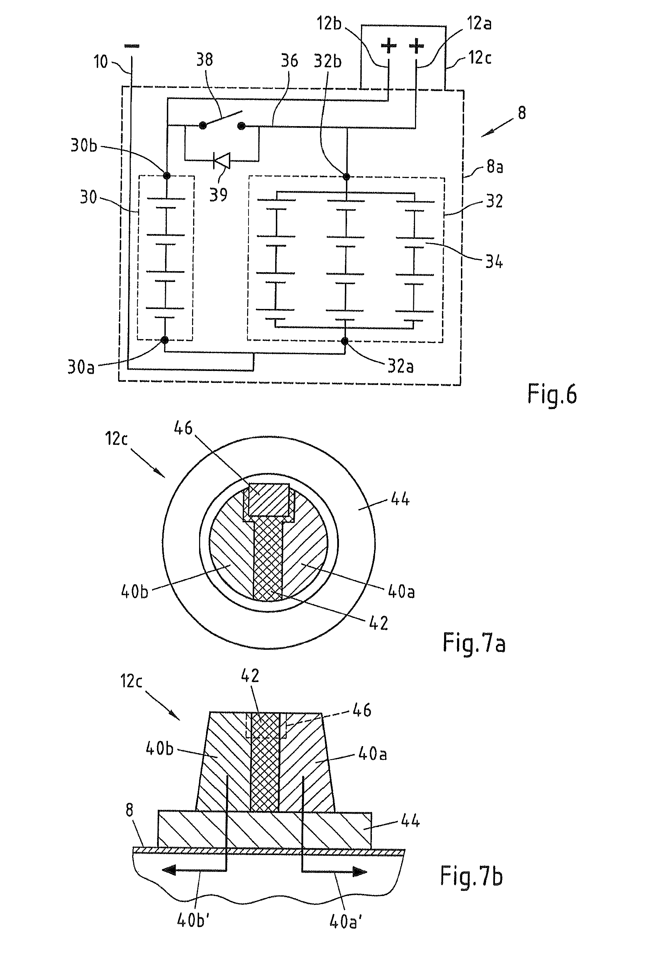

Figur 6 zeigt den Aufbau einer Fahrzeugbatterie entsprechend der Figur 4, wobei jedoch hier die beiden Batteriepole 12a, 12b in einem einzigen Kontaktelement 12c integriert sind. Innerhalb des Kontaktelements 12c sind die beiden Batteriepole 12a, 12b jedoch galvanisch voneinander getrennt, sodass sich ein Aufbau eines Batteriepols 12 vorzugsweise entsprechend den Figuren 7a, 7b einstellt. Die beiden Potentiale 12b und 12c könnten auch über einen Stecker oder durch eine andere Kontaktmethode aus dem Batteriegehäuse herausgeführt werden.

Figur 7a zeigt einen Querschnitt durch ein Kontaktelement 12c. Zu erkennen ist, dass das Kontaktelement 12c zwei Kontaktbereiche 40a, 40b aufweist. Vorzugsweise ist der Kontaktbereich 40a mit dem zweiten Ausgang 32b des zweiten Speichermoduls 32 kurzgeschlossen. Der Kontaktbereich 40b ist vorzugsweise mit dem zweiten Ausgang 30b des ersten Speichermoduls 30 kurzgeschlossen. Insofern können die Kontaktbereiche 40a, 40b die Batteriepole 12a, 12b darstellen. Zwischen den Kontaktbereichen 40a, 40b ist ein Isolator 42, der sich entlang der gesamten axialen Erstreckung des Kontaktelements 12c erstreckt, vorgesehen. Der Isolator 42 trennt die Kontaktbereiche 40a, 40b galvanisch voneinander.

Das Kontaktelement 12c ist auf einem nichtleitenden Polkranz 44 angeordnet.

Ferner ist in der Figur 7a ein radialer Verdrehschutz 46 angedeutet. Der Verdrehschutz 46 ist hier als Rücksprung im Isolator 42, der sich in Längsrichtung axial erstreckt, dargestellt.

Durch eine geeignete Kontaktierung des Kontaktelements 12 bzw. dessen Kontaktbereiche 40a, 40b ist es möglich, zum Einen den Starter 18 mit dem Kontaktbereich 40a in Kontakt zu bringen und das Verbrauchernetzwerk 14 mit dem Kontaktbereich 40b. Hierdurch ist sichergestellt, dass sich ein Spannungseinbruch am zweiten Speichermodul 32 nicht auf das Verbrauchernetzwerk 14 auswirkt, da dieses getrennt von dem Speichermodul 32 an dem Speichermodul 30 angeschlossen ist.

Ein Querschnitt durch einen Batteriepol der als Klemmelement 12c gebildet ist, ist in der Figur 7b dargestellt. Hier ist zu erkennen, dass die beiden Kontaktbereiche 40a, 40b kegelstumpfförmig das Kontaktelement 12c bilden. Das Kontaktelement 12c ist vorzugsweise vom Formfaktor entsprechend einer genormten Batteriepolklemme. Auch ist zu erkennen, dass sich der Isolator 42 axial entlang des Klemmelements 12c erstrecken kann und die Klemmbereiche 40a, 40b galvanisch voneinander trennt. Es ist auch möglich, das der Klemmbereich 40a eine größereMantelfläche und somit einen größeren Teilbereich des gesamten Klemmbereichs einnimmt als der Klemmbereich 40b, dessen Mantelfläche kleiner ist. Insbesondere kann der Klemmbereich 40a einen größeren Anteil an der Mantelfläche des Klemmelements aufweisen, da er einer höheren Strombelastung ausgesetzt ist.. Der Kontatkbereich 40a kann z.B. mit dem Starter und/oder Generator verbunden sein. Dies hat für den Kontatkbereich 40a die Notwendigkeit einer höhere Stromtragfähigkeit gegenüber dem Kontatkbereich 40b. Insbesondere kann die Strombelastung bei 300A Dauerstrom vom Generator am Kontaktbereich 40a gegenüber 100A für die Verbraucher am Kontaktbereich 40b sein. Im Startfall können sogar Ströme von über 300A vom Kontaktbereich 40a zum Starter fließen.

Darüber hinaus ist zu erkennen, dass der Verdrehschutz 46 nur in einem Bereich sich axial entlang des Klemmelements 12c erstreckt. Ferner ist zu erkennen, dass das Klemmelement 12c auf dem nichtleitenden Polkranz 44 aufgesetzt ist.

Darüber hinaus ist durch die Leitungen 40a', 40b' eine Verbindung der Klemmbereiche 40a, 40b in das Innere der Batterie 8 hergestellt.

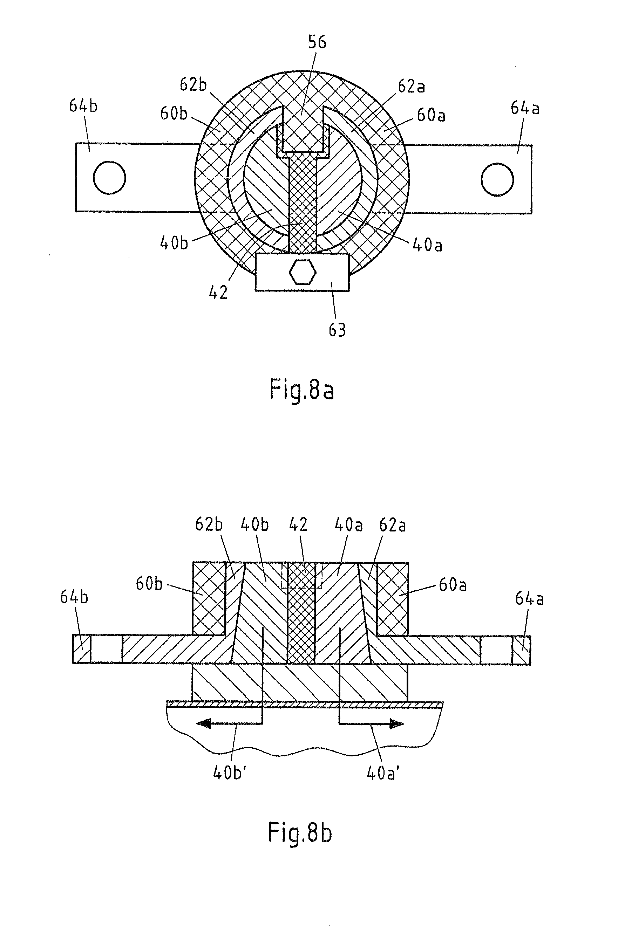

Die Leitung 40a' ist vorzugsweise mit dem zweiten Ausgang 32b des zweiten Speichermoduls 32 und die Leitung 40b' ist mit dem zweiten Ausgang 30b des ersten Speichermoduls 30 kurzgeschlossen. Zur Kontaktierung des Starters 18 als auch des Verbrauchernetzwerks 14 an den in den Figuren 7a und b gezeigten Batteriepol 12c ist eine Batteriepolklemme entsprechend beispielsweise Figur 8 geeignet.

Die Batteriepolklemme ist in der Figur 8 montiert an dem Klemmelement 12 dargestellt. Zu erkennen ist, dass sich ausgehend von einem Verdrehschutz 46 zwei Klemmbacken 60a, 60b jeweils halbkreisförmig erstrecken. Die Klemmbacken 60a, 60b laufen auf der dem Verdrehschutz 46 gegenüberliegenden Seite in ein Klemmstück 63 zusammen. Mittels des Klemmstücks 63 ist es möglich, die Klemmbacken 60a, 60b radial nach innen zueinander zu verschieben, sodass ein Verklemmen der Klemmbacken 60a, 60b an den Kontaktbereichen 40a, 40b ermöglicht wird.

Die Klemmbacken 60a, 60b als auch der Verdrehschutz 46 sind vorzugsweise aus einem elastischen Isolator gebildet. An der inneren Oberfläche der beiden Klemmbacken 60a, 60b sind jeweils Kontaktbereiche 62a, 62b vorgesehen. Die Kontaktbereiche 62a 62b verlaufen über einen Winkelabschnitt entlang der Innenseite der Klemmbacken 60a, 60b und sind aus einem leitenden Material hergestellt. Der Kontaktbereich 62a ist mit der Anschlusslasche 64a elektrisch verbunden. Der Kontaktbereich 62b ist mit der Anschlusslasche 64b elektrisch verbunden.

Durch den Verdrehschutz 46 wird sichergestellt, dass der Kontaktbereich 62a ausschließlich in elektrischen Kontakt mit dem Kontaktstück 40a gelangt und der Kontaktbereich 62b ausschließlich in elektrischen Kontakt mit dem Kontaktstück 40b.

Die Kontaktstücke 62a, 62b haben eine zu den Kontaktbereichen 40a, 40b korrespondierende Form, sodass sich die Kontaktstücke 62a, 62b an die Kontaktbereiche 40a, 40b anschmiegen und mittels der Klemmbacken 60a, 60b daran andrücken lassen. Hierdurch ist ein guter elektrischer Kontakt gewährleistet.

Figur 8b zeigt einen Längsschnitt durch einen Aufbau eines Klemmelements 12c mit einer Batteriepolklemme 60. Zu erkennen ist, dass die Kontaktbereiche 40a, 40b mit den jeweiligen Kontaktstücken 62a, 62b korrespondieren. Die Kontaktstücke 62a, 62b sind in elektrischen Kontakt mit den Kontaktbereichen 40a, 40b. Der Isolator der Klemmbacken 60a, 60b umgibt die Kontaktstücke 62a, 62b und drückt diese an die Kontaktbereiche 40a, 40b. Am axialen Ende des Isolators der Klemmbacken 60a, 60b sind die Kontaktstücke 62a, 62b in elektrischen Kontakt mit den Anschlusslaschen 64a, 64b. An die Anschlusslasche 64a kann die Leitung 18a und an die Anschlusslasche 64b kann die Leitung 14a angeschlossen werden.

Die in das Innere der Batterie 8 führenden Leitungen 40a' und 40b' sind galvanisch voneinander getrennt und nur bei einem Schließen des Schalters 38 können die beiden Leitungen 40a' und 40b' miteinander in elektrischen Kontakt gebracht werden.

Durch das Vorsehen des Schalters 38 ist es möglich, das Verbrauchernetzwerk 14 vor einem Einbruch der Batteriespannung im Startfall zu schützen. Dies ist konstruktiv besonders einfach und benötigt keinen zusätzlichen Bauraum. Außerdem sind keine zusätzlichen Komponenten zur Startstromeinschaltbegrenzung notwendig, da ein Einbrechen der Batteriespannung des zweiten Speichermoduls 32 in Kauf genommen wird.

## Patentansprüche

1. Fahrzeugbatterie umfassend:
- ein Gehäuse,
- einen in dem Gehäuse der Fahrzeugbatterie angeordneten Energiespeicher, wobei
- der Energiespeicher aus zumindest einem ersten und einem zweiten Speichermodul gebildet ist, und
- die Speichermodule in Reihe miteinander geschaltete Speicherzellen aufweisen **dadurch gekennzeichnet,**
- **dass** die Speichermodule mit jeweils einem ersten Ausgang miteinander kurzgeschlossen sind und
- **dass** die Speichermodule an jeweils einem dem ersten Ausgang elektrisch gegenpoligen zweiten Ausgang über zumindest ein innerhalb des Gehäuses angeordnetes Schalterelement miteinander elektrisch verbunden sind.

2. Fahrzeugbatterie nach Anspruch 1, **dadurch gekennzeichnet, dass** ein erster am Gehäuse angeordneter Batteriepol mit dem ersten Ausgang der Speichermodule verbunden ist, insbesondere dass ein Batterieminuspol mit den ersten Ausgang der Speichermodule verbunden ist.

3. Fahrzeugbatterie nach Anspruch 1 oder 2, **dadurch gekennzeichnet, dass** ein zweiter am Gehäuse angeordneter Batteriepol mit dem zweiten Ausgang des ersten Speichermoduls kurzgeschlossen ist, insbesondere dass ein erster Batteriepluspol mit den zweiten Ausgang des ersten Speichermoduls verbunden ist.

4. Fahrzeugbatterie nach einem der vorangehenden Ansprüche, **dadurch gekennzeichnet, dass** ein dritter am Gehäuse angeordneter Batteriepol mit dem zweiten Ausgang des zweiten Speichermoduls verbunden ist, insbesondere dass ein zweiter Batteriepluspol mit den zweiten Ausgang des zweiten Speichermoduls verbunden ist.

5. Fahrzeugbatterie nach einem der vorangehenden Ansprüche, **dadurch gekennzeichnet, dass** der erste Ausgang des jeweiligen Speichermoduls elektrisch auf einem niedrigeren Potential als dessen zweiter Ausgang liegt und insbesondere ein Minuspol des Speichermoduls ist und dass der zweite Ausgang des jeweiligen Speichermoduls ein Pluspol des Speichermoduls ist.

6. Fahrzeugbatterie nach einem der vorangehenden Ansprüche, **dadurch gekennzeichnet, dass** die Speicherzellen Bleiakkumulator-Zellen, Lithium-Eisenphosphat-Akkumulator-Zellen oder Lithium-Ionen- Akkumulator-Zellen sind.

7. Fahrzeugbatterie nach einem der vorangehenden Ansprüche, **dadurch gekennzeichnet, dass** in den Speichermodulen jeweils eine gleiche Anzahl an in Reihe geschalteten Speicherzellen angeordnet sind und/oder dass in den jeweiligen Speichermodulen ein ganzzahliges Vielfaches von drei oder vier Speicherzellen in Reihe geschaltet sind und/oder dass jeweils mehr als eine Speicherzelle parallel zueinander geschaltet sind und die jeweils parallel geschalteten Speicherzellen in Reihe geschaltet sind.

8. Fahrzeugbatterie nach einem der vorangehenden Ansprüche, **dadurch gekennzeichnet, dass** der erste Batteriepol an einem Boden des Gehäuse angeordnet ist und/oder dass der erste Batteriepol flächig, vorzugsweise vollflächig an einer Außenwand des Gehäuse angeordnet ist und/oder dass der erste Batteriepol an einem Deckel des Gehäuse, vorzugsweise flächig oder vollflächig, angeordnet ist.

9. Fahrzeugbatterie nach einem der vorangehenden Ansprüche, **dadurch gekennzeichnet, dass** der erste, zweite und/oder dritte Batteriepol jeweils in einer Polnische der Fahrzeugbatterie als vorzugsweise konischer Anschlussbolzen angeordnet ist.

10. Fahrzeugbatterie nach einem der vorangehenden Ansprüche, **dadurch gekennzeichnet, dass** ein erster Anschluss des Schalterelements unmittelbar mit dem zweiten Batteriepol verbunden ist und dass ein zweiter Anschluss des Schalterelements unmittelbar mit dem dritten Batteriepol verbunden ist.

11. Fahrzeugbatterie nach einem der vorangehenden Ansprüche, **dadurch gekennzeichnet, dass** das zweite Speichermodul ein ganzzahliges Vielfaches an Speicherzellen des ersten Speichermoduls aufweist und/oder das zweite Speichermodul eine größere, vorzugsweise eine ganzzahlig vielfache Speicherkapazität als das erste Speichermodul aufweist.

12. Fahrzeugbatterie nach einem der vorangehenden Ansprüche, **dadurch gekennzeichnet, dass** der zweite Batteriepol zum Anschluss an ein Bordnetz ohne einen Starter gebildet ist.

13. Fahrzeugbatterie nach einem der vorangehenden Ansprüche, **dadurch gekennzeichnet, dass** der dritte Batteriepol zum Anschluss an ein Bordnetz umfassend zumindest einen Starter gebildet ist.

14. Fahrzeugbatterie nach einem der vorangehenden Ansprüche, **dadurch gekennzeichnet, dass** der zweite Batteriepol und der dritte Batteriepol in einem gemeinsamen Kontaktelement, insbesondere einem gemeinsamen Anschlussbolzen geführt sind.

15. Fahrzeugbatterie nach Anspruch 14, **dadurch gekennzeichnet, dass** das Kontaktelement zwei galvanisch voneinander getrennte Kontaktbereiche aufweist.

16. Fahrzeugbatterie nach Anspruch 15, **dadurch gekennzeichnet, dass** ein erster der Kontaktbereiche mit dem zweiten Ausgang des ersten Speichermoduls verbunden ist und dass ein zweiter der Kontaktbereiche mit dem zweiten Ausgang des zweiten Speichermoduls verbunden ist und/oder dass das Schalterelement parallel zu den Kontaktbereichen geschaltet ist.

17. Fahrzeugbatterie nach einem der Ansprüche 14 bis 16, **dadurch gekennzeichnet, dass** das Kontaktelement zumindest teilweise zylindrisch oder kegelstumpfförmig ist.

18. Fahrzeugbatterie nach einem der Ansprüche 4 bis 18, **dadurch gekennzeichnet, dass** ein erster Kontaktbereich in einem ersten Winkelabschnitt entlang des Querschnitts des Kontaktelements angeordnet ist und dass ein zweiter Kontaktbereich in einem zweiten von dem ersten Winkelabschnitt verschiedenen Winkelabschnitt entlang des Querschnitts des Kontaktelements angeordnet ist.

19. Fahrzeugbatterie nach einem der Ansprüche 14 bis 19, **dadurch gekennzeichnet, dass** ein erster Kontaktbereich in einem ersten Axialabschnitt entlang der Längsachse des Kontaktelements angeordnet ist und dass ein zweiter Kontaktbereich in einem zweiten von dem ersten Axialabschnitt verschiedenen Axialabschnitt entlang der Längsachse des Kontaktelements angeordnet ist.

20. Fahrzeugbatterie nach einem der Ansprüche 14 bis 20, **dadurch gekennzeichnet, dass** zumindest ein Kontaktbereich an einer äußeren Umfangsfläche des Kontaktelements angeordnet ist.

21. Fahrzeugbatterie nach einem der Ansprüche 14 bis 21, **dadurch gekennzeichnet, dass** zwischen den Kontaktbereichen ein Isolationselement angeordnet ist.

22. Fahrzeugbatterie nach einem der Ansprüche 14 bis 22, **dadurch gekennzeichnet, dass** das Kontaktelement einen radial verlaufenden Verdrehschutz für eine Kontaktklemme aufweist und/oder dass der Verdrehschutz eine radial verlaufender Vorsprung oder Rücksprung ist und/oder dass der Verdrehschutz eine axiale Erstreckung entlang des Kontaktelements aufweist.

23. Fahrzeugbatterie nach einem der vorangehenden Ansprüche mit einer Fahrzeugbatteriepolklemme umfassend
- zwei einen Batteriepol umgreifende Klemmbacken,
- ein zwischen den Klemmbacken angeordnetes Klemmstück,
**dadurch gekennzeichnet, dass**
- die Klemmbacken aus einem Isolator gebildet sind,
- dass die Klemmbacken auf ihrer nach innen weisenden Oberfläche zumindest teilweise zwei voneinander galvanisch getrennte Kontaktstücke aufweisen und
- dass die Kontaktstücke jeweils mit einer an den Klemmbacken nach außen weisend angeordneten Anschlusslasche elektrisch verbunden sind.

24. Fahrzeugbatterie nach Anspruch 23, **dadurch gekennzeichnet, dass** die Klemmbacken einstückig aus dem Isolator gebildet sind.

25. Fahrzeugbatterie nach einem der Ansprüche 23 bis 24, **dadurch gekennzeichnet, dass** das die Klemmbacken eine zumindest teilweise zylindrisch oder kegelstumpfförmig verlaufende Öffnung zueinander ausbilden.

26. Fahrzeugbatterie nach einem der Ansprüche 23 bis 25, **dadurch gekennzeichnet, dass** ein erstes der Kontaktstücke in einem ersten Winkelabschnitt entlang der Öffnung zwischen den Klemmbacken angeordnet ist und dass ein zweites der Kontaktstücke in einem zweiten von dem ersten Winkelabschnitt verschiedenen Winkelabschnitt entlang der Öffnung zwischen den Klemmbacken angeordnet ist und/oder dass ein erstes der Kontaktstücke in einem ersten Axialabschnitt entlang der Längsachse der Klemmbacken angeordnet ist und dass ein zweites der Kontaktstücke in einem zweiten von dem ersten Axialabschnitt verschiedenen Axialabschnitt entlang der Längsachse der Klemmbacken angeordnet ist.

27. Fahrzeugbatterie nach einem der Ansprüche 23 bis 26, **dadurch gekennzeichnet, dass** die Klemmbacken einen radial verlaufenden Verdrehschutz für einen Batteriepol aufweisen und/oder dass der Verdrehschutz eine radial verlaufender Vorsprung oder Rücksprung ist. und/oder dass der Verdrehschutz eine axiale Erstreckung entlang der Klemmbacken aufweist.

28. Fahrzeugbatterie nach einem der Ansprüche 23 bis 27, **dadurch gekennzeichnet, dass** die Kontaktstücke jeweils durch den Isolator hindurch mit jeweils einer der Anschlusslaschen elektrisch verbunden sind und/oder dass die Kontaktstücke an einem axialen Ende der Klemmbacken mit jeweils einer der Anschlusslaschen elektrisch verbunden sind und/oder dass die Kontaktstücke jeweils einstückig mit jeweils einer der Anschlusslaschen gebildet sind und/oder dass die Kontaktstücke jeweils mit jeweils einer der Anschlusslaschen stoffschlüssig verbunden sind.
